# FASCICULE DE BREVET EUROPEEN

(11) **EP 1 750 974 B1**
(45) Date de publication et mention de la délivrance du brevet: **09.04.2008**
(21) Numéro de dépôt: 05757719.9
(22) Date de dépôt: 19.04.2005
(51) Int. Cl.: B60R 13/04, B60R 13/02

(54) **CLIP DE FIXATION INTEGRE A PENE PIVOTANT, NOTAMMENT POUR BAGUETTES DE CAISSE D"AUTOMOBILES**
INTEGRIERTE BEFESTIGUNGSKLEMME MIT STIFTBOLZEN, IM BESONDEREN ZUR VERWENDUNG FÜR KRAFTFAHRZEUGKAROSSERIELEISTEN
INTEGRATED FIXING CLIP COMPRISING A PIVOT BOLT, WHICH IS INTENDED, IN PARTICULAR, FOR MOTOR VEHICLE BODY STRIPS

(30) Priorité: 19.05.2004 FR 0405495
(43) Date de publication de la demande: 14.02.2007
(73) Titulaire: Rehau SA, 57340 Morhange (FR)
(72) Inventeur: PENNERATH, Eddy, F-57450 Henriville (FR)
(74) Mandataire: Metz, Paul
(86) Numéro de dépôt international: PCT/FR2005/000955
(87) Numéro de publication internationale: WO 2005/123455

(56) Documents cités:
- FR-A- 2 784 613
- GB-A- 2 316 707
- US-A- 4 388 355

## Description

La présente invention concerne un clip de fixation intégré amélioré, destiné principalement aux baguettes, moulures, enjoliveurs de ceinture de caisse ou de bas de caisse pour véhicules routiers notamment du type automobile.

L'invention se rapporte également à une baguette de protection ou d'enjolivement pour carrosserie de véhicules routiers notamment du type automobile comportant de tels clips intégrés améliorés.

Les baguettes de protection ou d'enjolivement de ce type sont des pièces en matière plastique réalisées par moulage par injection, conçues pour être montées fixes sur la carrosserie d'un véhicule.

De manière connue, la carrosserie présente une série d'ouvertures, généralement en forme de trou de serrure, destinées à recevoir et à coopérer avec des éléments de fixation de la baguette situés en vis-à-vis.

De façon classique, les baguettes comportent sur leur face arrière un espace creux longitudinal, continu et ouvert en direction de la carrosserie du véhicule, dans lequel sont logés ces éléments de fixation.

Dans l'art antérieur, on connaît des éléments de fixation constitués de plusieurs parties fabriquées séparément, devant être assemblées préalablement ou lors du montage de la baguette sur la carrosserie. De tels éléments de fixation ont par exemple été décrits dans les demandes antérieures au nom du déposant FR 2.726.519 et FR 2.748.300.

Ces dispositifs nécessitent une étape de moulage pour chacune de leurs parties, suivie d'une étape d'assemblage des différents éléments sur la baguette. La fabrication de la baguette est ainsi compliquée et rallongée.

Pour remédier à ces inconvénients, on a alors développé des éléments de fixation, appelés clips intégrés de fixation, formés d'une seule pièce et réalisés d'un seul tenant avec la baguette au cours d'une unique étape de moulage.

De tels éléments intégrés de fixation ont par exemple été représentés et décrits dans le brevet REHAU FR 2.784.613. Ils comportent un caisson servant de base de rattachement à la face intérieure de la baguette, un plan de glissement et de contact en forme de plateau et une aile de blocage sensiblement rectangulaire et légèrement inclinée. Cette aile de blocage, remplissant la fonction de tête d'encliquetage, est reliée au plan de glissement par une âme centrale servant d'axe au clip de fixation.

Les clips intégrés de l'art antérieur posent deux types de problème.

Premièrement, ils sont responsables de défauts d'aspect sur la face visible de l'élément à rapporter sur une carrosserie, de type baguette, bandeau, moulure ou autre. Ces défauts d'aspect résultent des différences locales d'accumulation de la matière plastique fondue ou de perturbations localisées de l'écoulement de celle-ci au moment du moulage.

En effet, la présence localisée de la base des clips intégrés perturbe le flux de la nappe d'injection en interrompant brutalement celui-ci. La matière plastique s'accumule alors en certains endroits et crée des microdéformations appelées retassures, visibles sur la face externe de l'élément à rapporter.

D'autres défauts d'aspect appelés « traces de cales » peuvent également apparaître lors du retrait des moyens de moulage en tiroir ou cales mobiles nécessaires à la réalisation des caissons de base des clips intégrés, laissant des traces sur la matière plastique non encore stabilisée.

Il se trouve qu'actuellement, ces défauts d'aspect ne sont plus acceptables par les constructeurs d'automobiles notamment sur les surfaces brillantes et laquées des accessoires destinés aux voitures actuelles.

Le deuxième problème concerne un manque de fiabilité du montage de ces baguettes, moulures ou autres élément rectilignes rapportés sur la carrosserie.

Selon l'état antérieur de la technique, le montage s'effectue en deux étapes, la première consistant à introduire la tête d'encliquetage de ces clips intégrés dans des ouvertures en trous de serrure de la carrosserie suite à une première poussée en rapprochement puis contact, et la deuxième étape aboutissant au blocage au moyen d'une poussée longitudinale jusqu'à butée du front des clips intégrés contre le bord transversal adjacent de l'ouverture correspondante de montage.

Malgré l'apparente simplicité de cette méthode de montage, des problèmes sont souvent rencontrés avec ce type de clips intégrés. En effet, la pose s'effectue en aveugle, la baguette opaque masquant la zone de montage. Il arrive alors que la poussée longitudinale ne soit pas complète, et ceci malgré l'existence éventuelle d'un témoin sonore. Par la suite, certaines baguettes, non complètement ou correctement fixées, se décrochent lors du roulage et finissent par tomber.

L'invention a pour but d'apporter simultanément une solution satisfaisante à ces deux problèmes tout en conservant les avantages d'un clip intégré de fixation. Pour cela, elle fournit un nouveau clip intégré de fixation de conception particulièrement avantageuse.

Ainsi, pour réduire notablement voire supprimer les retassures, on forme au moins une nervure longitudinale sur la face intérieure de la baguette et plus généralement de l'élément rectiligne rapporté, qui sert de base au clip intégré et sur laquelle est moulée d'une seule pièce la partie d'accrochage du clip de fixation selon l'invention.

Par ailleurs, pour garantir la fiabilité de la fixation au montage, on utilise pour chaque clip intégré au moins un pêne de verrouillage provoquant un blocage de verrouillage par butée du flanc de sa base contre la face arrière de la carrosserie lorsque le clip a pénétré en fond de course dans l'ouverture de montage prévue à cet effet.

L'invention fournit ainsi un clip intégré destiné à assurer la fixation sur une surface réceptrice et plus particulièrement sur la carrosserie d'un véhicule routier, d'un élément linéaire décoratif et/ou fonctionnel, par exemple du type baguette, bande, moulure, enjoliveur de ceinture de caisse ou de bas de caisse, qui comprend une partie de base le reliant à l'élément linéaire et une structure d'accrochage conçue pour coopérer avec une ouverture de montage ménagée en regard dans la surface réceptrice.

Selon une caractéristique essentielle de l'invention, la structure d'accrochage comporte au moins un élément de support portant en partie supérieure une barre de torsion à laquelle est suspendu par sa partie supérieure au moins un pêne de verrouillage qui s'étend sous cette barre de torsion de manière à pouvoir se déplacer, transversalement par rapport au plan d'encadrement défini par l'élément de support,et la barre de torsion, vers une position pivotée de dégagement lorsque le clip de fixation est introduit à travers l'ouverture de montage, mais à être rappelé élastiquement par l'effet de la barre de torsion vers une position de repos qui correspond à la position de verrouillage.

Cet élément de support peut avantageusement être un portique de torsion de forme générale en U inversé comprenant deux montants réunis en partie supérieure par la barre de torsion.

Selon une autre variante, il peut également s'agir d'une tige de support qui supporte en partie supérieure la barre de torsion, de préférence dans la zone centrale de celle-ci.

La partie de base, reliant le clip intégré selon l'invention à l'élément linéaire, fait préférentiellement partie d'une nervure longitudinale s'étendant sur la face intérieure de l'élément linéaire.

Selon une variante préférentielle, le clip de fixation selon l'invention comporte en outre une platine d'étanchéité.

L'invention fournit également un élément linéaire décoratif et/ou fonctionnel, par exemple du type baguette, bande, moulure, enjoliveur de ceinture de caisse ou de bas de caisse, destiné à être rapporté contre et monté sur une surface réceptrice et plus particulièrement la carrosserie d'un véhicule routier, qui comporte pour cela sur sa face intérieure au moins un clip intégré de fixation selon l'invention.

Grâce à la conception particulièrement inventive du clip selon l'invention, l'opération de montage de la baguette est grandement simplifiée, ce qui diminue le coût de pose et améliore sa fiabilité.

En outre, les retassures sont supprimées ou tout du moins fortement réduites jusqu'à un niveau acceptable par les constructeurs automobiles.

D'autres caractéristiques et avantages de l'invention apparaîtront à la lecture de la description détaillée qui va suivre, description faite en référence aux dessins annexés, dans lesquels :
- la figure 1 est une vue d'ensemble en perspective de la face intérieure d'un tronçon de baguette selon l'invention ;
- la figure 2 est une vue en perspective de l'avant d'un clip intégré selon une première variante de l'invention ;
- la figure 3 est une vue en perspective de l'arrière d'un clip intégré selon la première variante de l'invention ;
- la figure 4 est une vue de dessus d'un clip intégré selon la première variante de l'invention ;
- les figures 5 à 8 sont des vues schématiques en coupe transversale illustrant l'enfoncement progressif de ce clip dans une ouverture de montage jusqu'à son blocage avec verrouillage ;
- les figures 9 à 12 sont des vues de dessus correspondant aux vues en coupe des figures 5 à 8 ;
- les figures 13 à 15 sont des vues schématiques en coupe transversale illustrant plus complètement l'enfoncement progressif de ce clip dans l'ouverture de montage jusqu'à son blocage avec verrouillage ;
- les figures 16 à 18 sont des vues schématiques de dessus illustrant l'enfoncement progressif de ce clip jusqu'à son blocage avec verrouillage dans une ouverture de montage d'un autre type qui facilite le démontage ultérieur de la baguette ;
- la figure 19 est une vue schématique de dessus d'un, clip selon la première variante de l'invention en position de démontage dans une ouverture du type facilitant le démontage de la baguette ;
- la figure 20 est une vue en perspective de l'avant d'un clip intégré selon une deuxième variante de l'invention ;
- la figure 21 est une vue de dessus d'un clip intégré selon la deuxième variante de l'invention ;
- les figures 22 à 24 sont des vues schématiques en coupe transversale illustrant l'enfoncement progressif du clip selon la deuxième variante de l'invention, dans une ouverture de montage jusqu'à son blocage avec verrouillage ;
- les figures 25 à 27 sont des vues de dessus correspondant aux vues en coupe des figures 22 à 24.

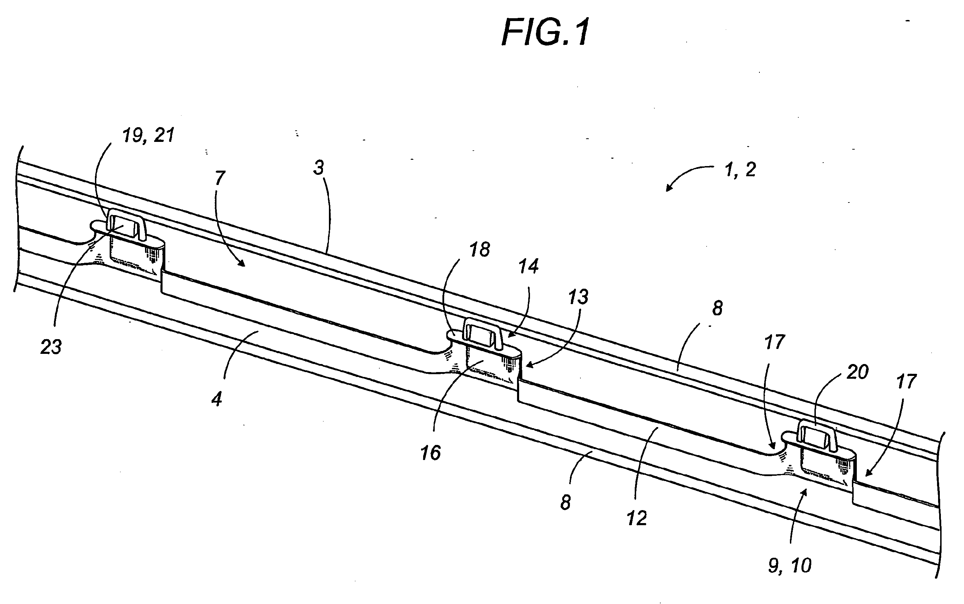

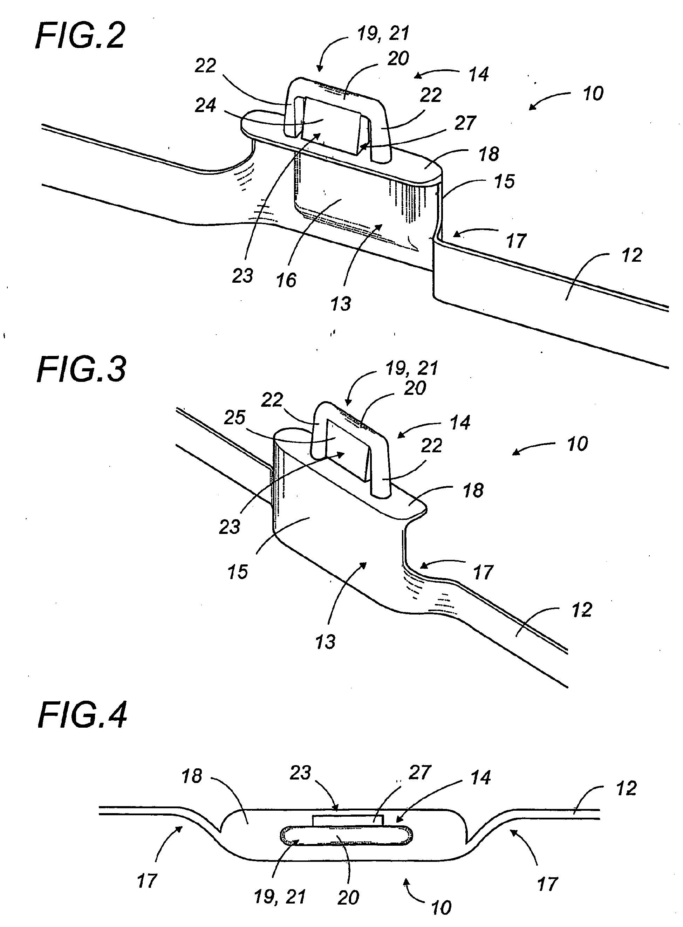

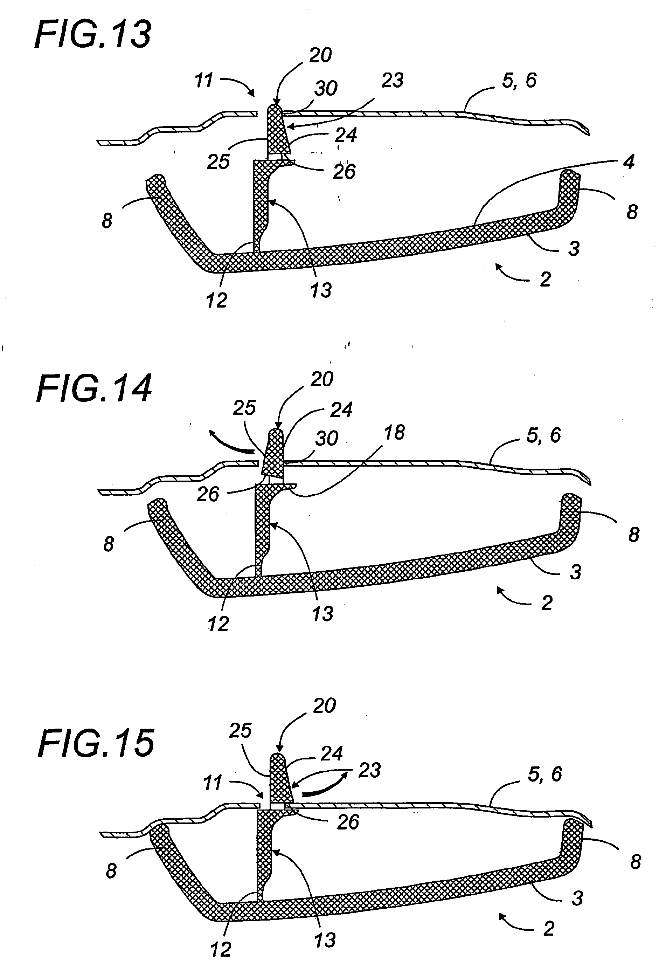

La baguette et le clip intégré de fixation selon la présente invention vont maintenant être décrits de façon détaillée en référence aux figures 1 à 24. Les éléments équivalents représentés sur les différentes figures porteront les mêmes références numériques.

Sur ces différentes figures, on a représenté un clip de fixation et une baguette constituant des modes de réalisation préférentiels de l'invention.

La présente invention se rapporte de façon générale à un élément linéaire à fixer sur une surface et plus particulièrement sur la carrosserie d'un véhicule routier.

Par élément linéaire on entend plus particulièrement tout élément décoratif et/ou fonctionnel par exemple du type baguette, bande, moulure et autre que l'on fixe sur les portes, les ceintures de caisse, les bas de caisse ou autres parties de la carrosserie d'un véhicule routier. Pour des raisons de commodité on regroupera tous ces objets par le seul terme de baguette.

Sur la figure 1, un tronçon 1 d'une baguette 2 selon l'invention a été représenté.

Ce tronçon 1 de baguette 2 se présente sous la forme d'une pièce allongée qui comporte deux faces, une face extérieure 3 visible lorsque la baguette est montée, par exemple bombée convexe, et une face intérieure 4, par exemple concave, appliquée contre une surface réceptrice 5 par exemple la tôle d'une carrosserie 6.

Le corps de la baguette 2 définit ainsi du côté de sa face intérieure 4 un espace creux 7 longitudinal, continu et ouvert, destiné à être placé en direction de la surface réceptrice 5, préférentiellement la carrosserie 6 d'un véhicule.

De manière classique, l'espace creux 7 est limité sur les côtés par deux rebords 8 longitudinaux, sensiblement verticaux ou obliques selon les exigences de style.

La baguette 2 comporte sur sa face intérieure 4 des moyens de fixation 9 à montage rapide de la baguette 2 sur la surface 5. Ces moyens de fixation 9 sont ici du type connu sous la dénomination générale de clips intégrés 10, qui signifie qu'ils sont réalisés d'une seule pièce et d'un seul tenant avec la baguette 2 au cours d'une unique étape de moulage.

Les clips intégrés de fixation 10 représentés sur la figure 1 correspondent à la première variante de l'invention. Il ne s'agit cependant que d'un exemple illustratif. La baguette 2 selon l'invention n'est en effet pas limitée à ce type de clip, mais peut comporter toute autre variante de clip intégré comprise dans la portée des revendication et notamment la deuxième variante de clip qui sera décrite dans la suite de ce descriptif.

Pour assurer le montage et la fixation de la baguette 2 sur la surface réceptrice 5, ces clips de fixation 10 sont conçus pour coopérer avec une série d'ouvertures 11 prévues en regard dans la surface réceptrice 5, préférentiellement la tôle de la carrosserie 6 notamment au niveau des portes ou des bas de caisse, qui seront décrites par la suite.

Sur sa face intérieure 4, la baguette selon l'invention comporte au moins une nervure longitudinale 12, qui se prolonge préférentiellement sur toute sa longueur. Cette nervure longitudinale 12 présente une forme en lame. En outre, elle est préférentiellement mince afin d'éviter de provoquer des retassures sur l'autre face. En effet, après moulage, la solidification d'une nervure plus épaisse pourrait provoquer des marques visibles sur la face externe de la baguette au cours du refroidissement de celle-ci.

Les clips de fixation 10 existent en plusieurs endroits sur toute la longueur du corps de la baguette 2 de manière à garantir un maintien uniforme et solide de la pièce moulée contre la surface 5. Ils sont disposés selon un espacement prédéterminé correspondant à celui des ouvertures 11 avec lesquelles ils se retrouvent en vis-à-vis lorsque la baguette est positionnée contre la surface réceptrice.

Selon une caractéristique essentielle de l'invention, les clips de fixation 10 sont intégrés à cette nervure 12. Ils sont ainsi formés sur et d'une seule pièce avec cette nervure, qui sert de base aux clips de fixation.

Sur la figure 1, on a représenté les clips de fixation 10 positionnés de manière équidistante le long d'une nervure 12 centrale. Néanmoins, suivant les modèles de baguette et les possibilités d'ouvertures dans la surface réceptrice, ces clips 10 peuvent être disposés différemment.

Ainsi par exemple, ils peuvent être disposés avec un espacement quelconque entre les différents clips 10 sur une nervure longitudinale 12 en position centrale ou décalée par rapport à la ligne médiane de la baguette.

Dans le cas d'une baguette 2 large, on peut également envisager la présence de deux nervures longitudinales 12, voire plus. Sur ces nervures, les clips de fixation 10, en nombre quelconque, peuvent même se trouver dans des plans différents si par exemple la baguette est destinée à recouvrir une jonction entre deux plans jointifs de carrosserie.

Chaque clip de fixation 10 comporte préférentiellement une partie de base 13 de la face supérieure de laquelle fait saillie une structure d'accrochage 14 conçue pour s'engager dans l'ouverture de carrosserie 11 correspondante.

La base 13 est réalisée localement à partir de la nervure longitudinale 12 et peut préférentiellement se prolonger au-dessus de celle-ci. Elle présente une hauteur suffisante pour maintenir la structure d'accrochage 14 à distance de la face intérieure 4 de la baguette d'une valeur rattrapant la flèche de concavité de la baguette 2 en vue de permettre l'accrochage sur la tôle de la carrosserie 6.

Afin d'éviter les problèmes de retassure précités, la partie de base 13 des clips 10 est rattachée à la face intérieure 4 de la baguette par une paroi latérale de fond 15 d'épaisseur fine, de préférence sensiblement de même épaisseur ou plus fine que la nervure longitudinale 12 et faisant partie intégrante de celle-ci.

La paroi latérale de fond 15 est préférentiellement renforcée vers le haut par une surépaisseur de matière 16 servant de support mécanique à la structure d'accrochage 14 afin de garantir sa bonne tenue lors du montage.

Selon un mode de réalisation préférentiel représenté sur les différentes figures, la nervure longitudinale 12 présente un décalage latéral 17 au niveau d'au moins un des clips intégrés 10. Du fait de ce décalage, la base 13 de ces clips de fixation se trouve légèrement en retrait par rapport au reste de la nervure longitudinale 12. Ce décalage latéral 17, obtenu préférentiellement au moyen de portions de courbe progressive, confère à la base 13 une meilleure stabilité et résistance au pliage lors du montage de la baguette contre la carrosserie du véhicule.

De manière évidente, l'invention n'est pas limitée à une telle disposition. La partie de base 13 des clips de fixation peut également être réalisée alignée dans le prolongement longitudinal de la nervure 12. Dans ce cas, la résistance au pliage peut être améliorée par l'ajout au niveau de la base 13 d'une ou plusieurs nervures transversales de renfort.

De façon préférentielle, les clips de fixation 10 peuvent comporter en outre une platine d'étanchéité 18 destinée à obturer les ouvertures 11 de carrosserie lorsque la baguette est en place, afin de limiter l'entrée d'eau et de saletés à l'intérieur de la carrosserie et d'atténuer la transmission du bruit de roulage.

Cette platine 18, de préférence sensiblement parallèle à la baguette, surmonte la base 13 et s'étend sous la structure d'accrochage 14 du clip de manière à se retrouver après montage en contact avec le bord marginal de l'ouverture 11 découpée dans la tôle de la carrosserie 6 du véhicule. Cette platine 18 est préférentiellement de forme sensiblement ovale, rectangulaire, ou intermédiaire entre ces deux formes. Elle peut être sensiblement plane ou présenter une concavité ou un rebord dirigé(e) vers l'ouverture 11.

La platine 18 assure l'étanchéité entre la baguette et la carrosserie afin d'éviter par exemple un flux d'air qui pourrait provoquer des perturbations sonores ou des entrées d'eau lors du lavage à haute pression.

Cependant, il peut également être prévu que la platine d'étanchéité 18 ne soit pas en contact avec la carrosserie, mais se retrouve à proximité de celle-ci lorsque la baguette est montée en position finale. Une étanchéité totale n'est alors plus garantie. Toutefois, les entrées d'eau, de poussières et de saletés sont fortement réduites par la présence de la platine d'étanchéité 18 et par les rebords 8 de la baguette en appui contre la carrosserie.

Selon une variante préférentielle de l'invention, la partie supérieure de la base 13 du clip de fixation 10 peut être conçue de manière à constituer directement la platine d'étanchéité 18.

Chaque clip de fixation 10 selon l'invention comporte une structure d'accrochage 14 supportée par la partie de base 13 du clip et éventuellement par la platine d'étanchéité 18. La structure d'accrochage 14 comporte au moins un élément de support 19 portant en partie supérieure une barre de torsion 20, qui est rectiligne et de préférence sensiblement parallèle à l'axe longitudinal de la baguette 2.

Il est possible d'imaginer plusieurs façons de réaliser l'élément de support 19, celui-ci pouvant être de nature quelconque tant qu'il reste approprié pour remplir sa fonction.

Selon un premier mode de réalisation représenté sur les figures 1 à 19, l'élément de support 19 est un portique de torsion 21 qui, de préférence, se dresse sensiblement perpendiculairement au plan du corps de la baguette et sensiblement parallèlement à l'axe longitudinal de la baguette.

Le portique de torsion 21 présente une forme en U inversé, et comporte deux montants 22 sensiblement verticaux ou pour une meilleure stabilité légèrement inclinés et convergents vers le haut, réunis en partie supérieure par la barre de torsion 20 sensiblement horizontale.

La barre de torsion 20 constitue la partie supérieure d'un pêne de verrouillage 23 qui s'étend dans l'espace d'encadrement délimité à l'intérieur du portique et qui occupe préférentiellement la majorité de cet espace.

Le pêne de verrouillage 23 est de préférence une pièce de forme sensiblement prismatique rectangle dont la partie supérieure se confond avec la barre de torsion 20 et dont le corps se trouve suspendu à cette barre 20 de manière à pourvoir se déplacer latéralement au travers du cadre formé par le portique 21, mais à être rappelé élastiquement par l'effet de la barre de torsion 20 vers une position de repos qui correspond à la position de verrouillage.

En raison de sa forme prismatique, la face avant 24 et la face arrière 25 du pêne 23 divergent vers le bas, c'est-à-dire vers la partie de base 13 du clip de fixation 10, ce qui lui procure un flanc de base large 26 servant comme on le verra ci-après de butée de verrouillage.

En position de repos, la face arrière 25 du pêne de verrouillage 23 est préférentiellement sensiblement verticale et située dans le plan général du portique de torsion 21, alors que la face avant 24 est inclinée et divergente vers le bas. Le pêne 23 forme alors une protubérance ou partie saillante 27 qui dépasse largement du plan une partie saillante 27 qui dépasse largement du plan d'encadrement défini par l'élément de support 19 et la barre de torsion 20, à l'avant de celui-ci dans ce mode de réalisation. Cette configuration peut évidemment être inversée, la partie saillante 27 se trouvant alors à l'arrière.

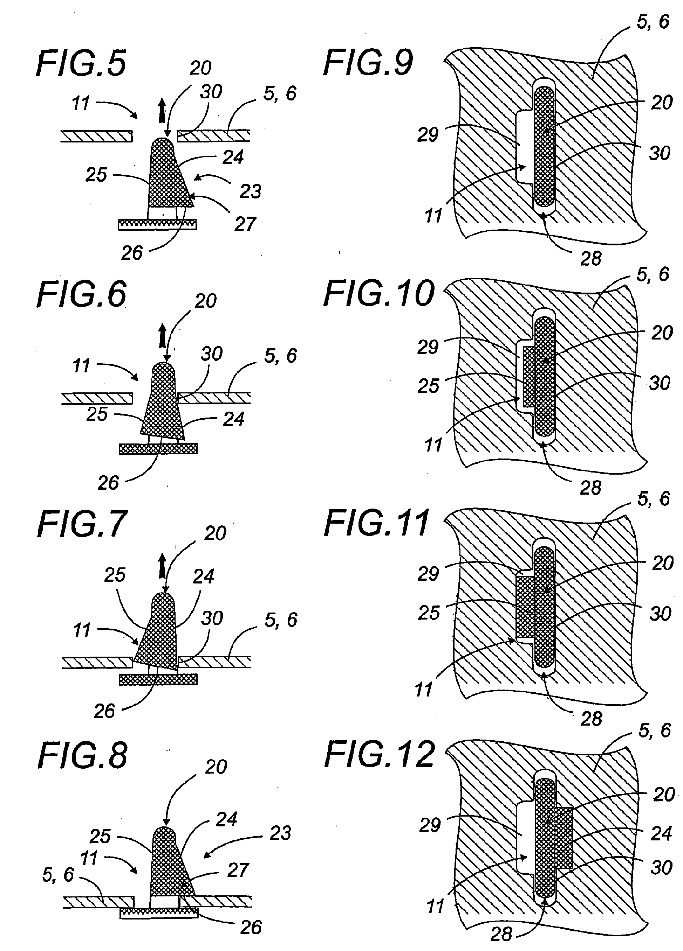

Le pêne de verrouillage 23 a pour but d'immobiliser la baguette 2 contre la surface réceptrice 5 ou la carrosserie 6 du véhicule lorsqu'il est introduit à travers les ouvertures 11 de montage. Sa mise en place a été largement illustrée sur les figures 5 à 15.

Contrairement aux clips intégrés classiques, la forme des ouvertures 11 de la carrosserie 6 n'est pas du type en « trou de serrure ». Elles se présentent comme une fente 28 de forme générale sensiblement rectangulaire prévue pour laisser pénétrer librement le portique de torsion 21 et la partie supérieure étroite du pêne 23.

Cette fente 28 comporte sur un de ses côtés une encoche latérale de dégagement 29 prévue du côté opposé à la partie saillante 27 du pêne de verrouillage 23 au repos, afin de laisser passer la partie large du pêne pivotée en position de dégagement lorsque celui-ci est forcé latéralement au moment de l'entrée dans l'ouverture de montage 11 correspondante.

A l'état de repos illustré sur les figures 5, 9 et 13, le flanc de base large 26 du pêne de verrouillage 23 et l'encoche latérale de dégagement 29 de la fente 28 des ouvertures 11 de montage ne sont pas situées du même côté.

Ainsi comme on peut le voir sur les figures 6, 7, 10, 11 et 14, lors de l'introduction du portique 21 et du pêne de verrouillage 23 à travers la fente 28 des ouvertures de montage 11, le pêne de verrouillage est forcé à pivoter autour de la barre de torsion 20. Sa face avant 24 est maintenue pendant tout le mouvement d'enfoncement sensiblement dans le plan général du portique 21 par son glissement-butée contre le bord 30 en regard de l'ouverture de montage 11 tandis que son autre face 25 est ainsi maintenue inclinée et pénètre dans l'ouverture 11 par l'encoche de dégagement 29.

Lorsque le pêne de verrouillage 23 a complètement pénétré dans l'ouverture de montage 11, il reprend sa position initiale par l'effet du rappel élastique provenant de la barre de torsion 20 à laquelle sa partie supérieure est solidarisée.

En position finale de montage représentée sur les figures 8, 12 et 15, le flanc de base large 26 du pêne de verrouillage 23 porte en pleine tôle 6 sur une surface s'étendant relativement loin du bord latéral 30 de l'ouverture 11 de montage et donc loin des éventuelles bavures liées au poinçonnage de l'ouverture 11. Un verrouillage fiable et de bonne qualité est ainsi assuré.

Comme indiqué, l'immobilisation de verrouillage résulte du contact de butée du flanc de base 26 du pêne de verrouillage 23 avec la face interne de la tôle de carrosserie 6 au droit du bord 30 correspondant de l'ouverture de montage 11. Les dimensions du clip intégré 10 sont étudiées pour que dans cette position, la baguette 2 arrive contre la carrosserie 6 en immobilisation totale.

Il peut également être envisagé que le flanc de base 26 soit arrondi ou biseauté afin de faciliter l'engagement derrière la face interne de la tôle de carrosserie 6 au droit du bord 30 correspondant de l'ouverture de montage 11.

De manière évidente, le pêne de verrouillage 23 n'est pas limité à une forme prismatique et peut présenter toute autre forme appropriée. Il peut ainsi par exemple être simplement constitué d'un volet plan d'une épaisseur suffisante pour que son flanc de base 26 puisse réaliser une butée de blocage satisfaisante.

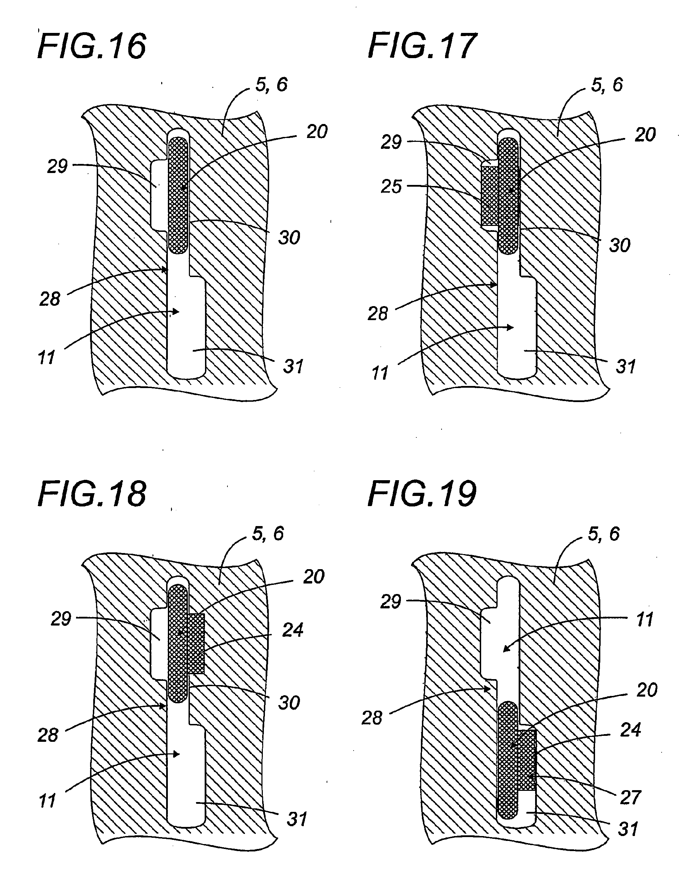

Afin de faciliter un éventuel démontage ultérieur de la baguette 2 selon l'invention, il peut également être prévu que les ouvertures 11 présentent en outre une encoche latérale de démontage 31 comme illustrée sur les figures 16 à 19.

Dans cette configuration, la fente 28 se trouve allongée par rapport à la variante précédemment décrite de l'ouverture de montage 11. Elle comporte une encoche latérale de dégagement 29 et une encoche de démontage 31 décalée longitudinalement par rapport à l'encoche latérale de dégagement 29, chacune étant de préférence située à une extrémité de la fente 28. L'encoche de démontage 31 s'étend sur le côté de la fente 28 correspondant à la position de la partie saillante 27 du pêne 23 au repos et étant donc opposé à celui de l'encoche latérale de dégagement 29.

Le montage du clip intégré 10 dans cette ouverture modifiée a lieu au niveau de l'encoche de dégagement 29 et se déroule d'une façon similaire à celle déjà décrite précédemment. Les différentes étapes de ce montage ont été représentées sur les figures 16 à 18.

Pour réaliser facilement le démontage de la baguette 2, il suffit de déplacer longitudinalement le corps de la baguette jusqu'à ce que la partie saillante 27 du pêne de verrouillage 23 se retrouve en face de l'encoche de démontage 31 comme représenté sur la figure 19. Elle est alors dégagée, ce qui permet de faire repasser la structure d'accrochage 14 du clip intégré à travers l'ouverture de montage 11 et ainsi de démonter la baguette sans aucune difficulté.

Avec une telle configuration des ouvertures de montage 11, il peut être nécessaire de rajouter un moyen de verrouillage longitudinal de la baguette 2 selon l'invention pour maintenir celle-ci en position de blocage une fois le montage des clips 10 effectué.

On peut imaginer pour cela une fixation longitudinale de la baguette par vissage, par marteau ou alors par une ouverture 11 sans encoche latérale de démontage, toutes les autres ouvertures 11 étant alors munies d'une encoche de démontage.

Selon un autre mode de réalisation, on peut également imaginer que l'élément de support 19 ne soit plus un portique de torsion formé de deux montants réunis en,partie supérieure par une barre de torsion, mais une simple tige de support 32 portant en partie supérieure la barre de torsion 20.

Comme précédemment, un ou plusieurs pênes de verrouillage 23 sont suspendus par leur partie supérieure à cette barre de torsion 20 et s'étend(ent) sous cette barre de torsion 20 de manière à pouvoir se déplacer, transversalement par rapport au plan d'encadrement défini par la tige de support 32 et la barre de torsion 20, vers une position pivotée de dégagement lorsque le clip de fixation 10 est introduit à travers l'ouverture de montage 11, mais à être rappelé(s) élastiquement par l'effet de la barre de torsion 20 vers une position de repos correspondant à la position de verrouillage.

Selon une variante non représentée, la barre de torsion 20 peut être supportée par la tige de support 32 au niveau de l'une de ses extrémités. La barre de torsion 20 s'étend alors en porte-à-faux à partir de la zone supérieure de la tige de support 32 à la manière d'une potence.

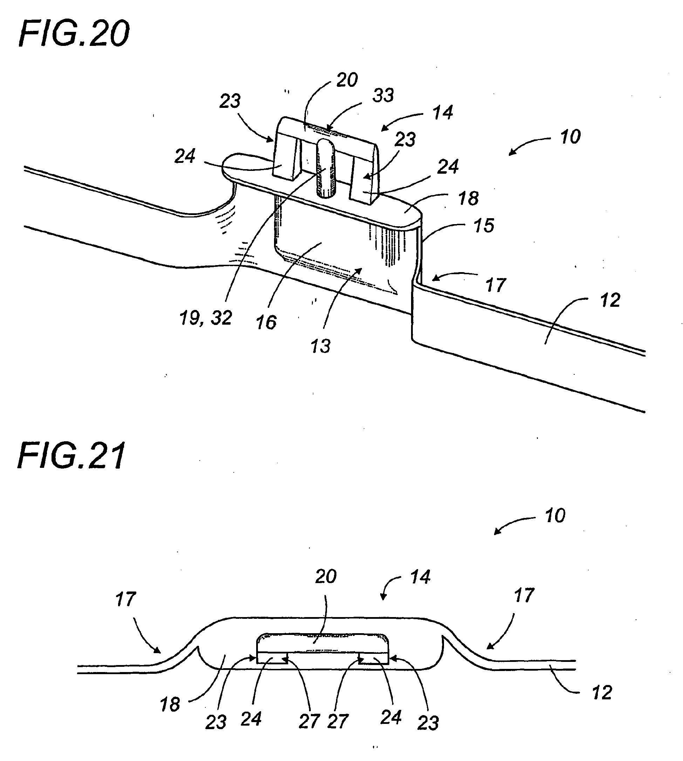

Selon une autre variante préférentielle et représentée sur les figures 20 à 27, la barre de torsion 20 peut être supportée au niveau de sa zone centrale 33 par la tige de support 32 servant de potence centrale. La barre de torsion dépasse alors des deux côtés de la tige de support 32.

Avantageusement, un pêne de verrouillage 23 est suspendu à chacune des deux extrémités libres de la barre de torsion 20 et s'étend en dessous de celle-ci.

Comme précédemment, ces pênes de verrouillage 23 sont de préférence des pièces de forme sensiblement prismatique rectangle dont la partie supérieure se confond avec la barre de torsion. Ils comportent une face avant 24 et une face arrière 25 divergeant vers le bas, c'est-à-dire vers la partie de base 13 du clip de fixation 10, et une face inférieure formant un flanc de base large 26 pouvant servir de butée de verrouillage. Le flanc de base 26 peut avantageusement être arrondi ou biseauté.

En position de repos, chacun des pênes comporte une protubérance ou partie saillante 27 qui dépasse largement du plan défini par la tige de support 32 et la barre de torsion 20. Sur la variante représentée, les parties saillants 27 des deux pênes de verrouillage 23 dépassent toutes les deux vers l'avant de la structure d'accrochage 14. De manière évidente, l'homme du métier pourra imaginer des variantes dans lesquelles ces parties saillantes 27 dépassent toutes les deux vers l'arrière de la structure d'accrochage 14 ou dépassent chacune d'un côté de celle-ci. L'ouverture de montage 11 doit alors simplement être adaptée en conséquence.

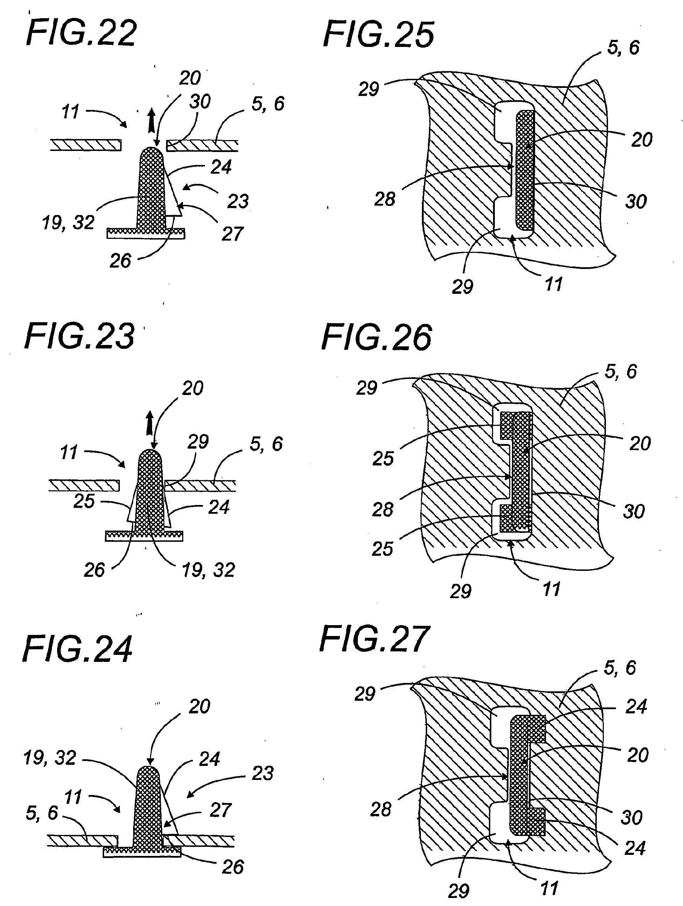

Le principe du montage de ce clip de fixation a été illustré sur les figures 22 à 27.

Pour coopérer avec une structure d'accrochage 14 de ce type, l'ouverture de montage 11 est légèrement différente de celle précédemment décrite.

Elle se présente comme une fente 28,de forme générale sensiblement rectangulaire prévue pour laisser pénétrer librement la barre de torsion 20 et la partie supérieure étroite des pênes 23, et comporte non pas une, mais deux encoches latérales de dégagement 29.

Chacune de ces encoches de dégagement 29 est située sur un coté de la fente 28, non plus dans la zone centrale de celle-ci mais au niveau de l'une de ses extrémités et s'étend du côté opposé à la partie saillante 27 au repos du pêne de verrouillage 23 correspondant. Les deux encoches de dégagement 29 peuvent donc se trouver sur l'un ou l'autre des deux côtés de la fente 28, voire même chacune sur un côté différent de celle-ci, selon la configuration adoptée pour les deux pênes de verrouillage 23.

Comme on peut le voir sur les séquences des figures 22 à 27, le principe de montage reste le même que celui précédemment décrit pour la variante de base du clip selon l'invention.

Dans tous les cas, le montage de la baguette 2 selon l'invention est extrêmement aisé et répond parfaitement au problème posé. En effet, la poussée longitudinale problématique de la baguette de l'état antérieur de la technique n'existe plus dans cette invention.

Il suffit de positionner la baguette 2 sur la carrosserie 6 du véhicule à l'endroit voulu, les clips 10 étant en correspondance avec les ouvertures de montage 11 puis de pousser selon un seul mouvement de plaquage pour que la baguette 2 soit fixée correctement du premier coup. Les pênes de verrouillage 23 s'effacent momentanément et reviennent par rappel élastique pour se trouver en butée de verrouillage par leur flanc de base 26 contre la face arrière de la carrosserie 6 et ceci après un claquement sonore caractéristique. On est ainsi assuré d'un travail minimal de montage et d'une immobilisation parfaite de fixation dès l'enfoncement.

Pour faciliter encore le montage, on peut prévoir un clip d'indexage devant être positionné en premier et qui coopère avec une ouverture d'indexage de la carrosserie réalisée de façon précise tant au niveau de son positionnement que de ses dimensions. Ce clip d'indexage est situé à un endroit quelconque de la baguette et par exemple à l'une de ses extrémités ou en son centre.

Une fois cet indexage réalisé, les autres clips de fixation pénètrent sans difficulté dans les ouvertures de montage qui leurs sont associées et qui ont de préférence des dimensions plus grandes dans le sens longitudinal pour absorber les tolérances de fabrication et les dilatations de la baguette.

Les clips selon l'invention remédient également au problème des défauts d'aspects. En effet, ils ne comportent aucune structure en caisson qui nécessite l'utilisation de cales mobiles provoquant des déformations au démoulage et laissant des traces visibles inesthétiques.

Ils ne constituent pas non plus d'interruption localisée de l'écoulement, ce qui évite l'apparition de retassures localisées. Seule la fine nervure longitudinale 12 peut éventuellement laisser une légère trace sur la face extérieure visible 3 de la baguette 2. Cependant, cette trace ne se présente pas comme une succession inesthétique de marques localisées, mais comme une ligne longitudinale pouvant être prise pour un effet de style recherché et qui est de ce fait bien acceptée par les constructeurs automobiles.

Il doit être bien compris que l'invention ne se limite pas aux clips de fixation et baguettes tels que décrits ci-dessus et représentés sur les figures. Elle s'étend également à toutes les variantes imaginables par l'homme du métier comprises dans la portée des revendications.

## Revendications

1. Clip intégré destiné à assurer la fixation sur une surface réceptrice (5) et plus particulièrement sur la carrosserie (6) d'un véhicule routier, d'un élément linéaire (2) décoratif et/ou fonctionnel, par exemple du type baguette, bande, moulure, enjoliveur de ceinture de caisse ou de bas de caisse, ce clip de fixation (10) comprenant une partie de base (13) le reliant à l'élément linéaire (2) et une structure d'accrochage (14) conçue pour coopérer avec une ouverture de montage (11) ménagée en regard dans la surface réceptrice (5, 6), **caractérisé en ce que** la structure d'accrochage (14) comporte au moins un élément de support (19) portant en partie supérieure une barre de torsion (20) à laquelle est suspendu par sa partie supérieure au moins un pêne de verrouillage (23) qui s'étend sous cette barre de torsion de manière à pouvoir se déplacer, transversalement par rapport au plan d'encadrement défini par l'élément de support et la barre de torsion, vers une position pivotée de dégagement lorsque le clip de fixation (10) est introduit à travers l'ouverture de montage (11), mais à être rappelé élastiquement par l'effet de la barre de torsion (20) vers une position de repos qui correspond à la position de verrouillage.

2. Clip intégré selon la revendication précédente **caractérisé en ce que** la partie de base (13) le reliant à l'élément linéaire (2) fait partie d'une nervure longitudinale (12) s'étendant sur la face intérieure (4) de l'élément linéaire (2).

3. Clip intégré selon l'une quelconque des revendications précédentes **caractérisé en ce que** l'élément de support (19) est un portique de torsion (21) de forme générale en U inversé qui comprend deux montants (22) réunis en partie supérieure par la barre de torsion (20).

4. Clip intégré selon la revendication précédente **caractérisé en ce que** le portique de torsion (21) comporte deux montants (22) légèrement inclinés et convergents vers le haut, réunis en partie supérieure par une barre de torsion (20) sensiblement horizontale.

5. Clip intégré selon la revendication 1 ou 2 **caractérisé en ce que** l'élément de support (19) est une tige de support (32) portant en partie supérieure la barre de torsion (20).

6. Clip intégré selon la revendication précédente **caractérisé en ce que** la barre de torsion (20) est supportée au niveau de sa zone centrale (33) et dépasse ainsi des deux côtés de la tige de support (32).

7. Clip intégré selon l'une quelconque des revendications précédentes **caractérisé en ce qu'**il comporte un unique pêne de verrouillage (23).

8. Clip intégré selon l'une quelconque des revendications 1 à 6 **caractérisé en ce qu'**il comporte deux pênes de verrouillage (23).

9. Clip intégré selon l'une quelconque des revendications précédentes **caractérisé en ce que** le pêne de verrouillage (23) comporte une partie saillante (27) qui dépasse largement du plan d'encadrement défini par l'élément de support (19) et la barre de torsion (20).

10. Clip intégré selon l'une quelconque des revendications précédentes **caractérisé en ce que** le pêne de verrouillage (23) est une pièce de forme sensiblement prismatique rectangle comprenant un flanc de base (26) servant de butée de verrouillage.

11. Clip intégré selon la revendication précédente **caractérisé en ce que** le flanc de base (26) est arrondi ou biseauté.

12. Clip intégré selon l'une quelconque des revendications 2 à 11 **caractérisé en ce que** la partie de base (13) est rattachée à la face intérieure (4) de l'élément linéaire (2) par une paroi latérale de fond (15) d'épaisseur fine, faisant partie intégrante de la nervure longitudinale (12) et est renforcée vers le haut par une surépaisseur de matière (16).

13. Clip intégré selon l'une quelconque des revendications 2 à 12 **caractérisé en ce que** la partie de base (13) est décalée latéralement par rapport au reste de la nervure longitudinale (12).

14. Clip intégré selon l'une quelconque des revendications 2 à 12 **caractérisé en ce que** la partie de base (13) est alignée avec le reste de la nervure longitudinale (12) et renforcée par au moins une nervure transversale de renfort.

15. Clip intégré selon l'une quelconque des revendications précédentes **caractérisé en ce qu'**il comporte en outre une platine d'étanchéité (18).

16. Elément linéaire (2) décoratif et/ou fonctionnel, par exemple du type baguette, bande, moulure, enjoliveur de ceinture de caisse ou de bas de caisse, destiné à être rapporté contre et monté sur une surface réceptrice (5) et plus particulièrement la carrosserie (6) d'un véhicule routier, comportant pour cela sur sa face intérieure (4) des moyens de fixation (9) à montage rapide conçus pour coopérer avec une série d'ouvertures de montage (11) ménagées en regard dans la surface réceptrice (5, 6), **caractérisé en ce qu'**au moins un de ses moyens de fixation (9) est un clip intégré (10) selon l'une quelconque des revendications précédentes.

17. Elément linéaire selon la revendication précédente **caractérisé en ce qu'**au moins un de ses moyens de fixation (9) est un clip d'indexage.

18. Elément linéaire selon la revendication 16 ou 17 **caractérisé en ce qu'**il comporte en outre un moyen de verrouillage longitudinal.

## Claims

1. An integrated clip intended to ensure fixing on a receiving surface (5) and more particularly on the body (6) of a road vehicle, of a decorative and/or functional linear element (2), for example of the kind of a rod, a slat, a moulding, a bodywork belt line trim or a rocker trim, said fixing clip (10) comprising a base part (13) which connects it to the linear element (2) and a clamping structure (14) designed to cooperate with a mounting hole (11) set opposite in the receiver surface (5, 6), **characterized in that** the clamping structure (14) comprises at least one support element (19) holding a torsion bar at the upper part (20) to which is suspended by its upper part at least one locking bolt (23) which extends below said torsion bar, in such way that it can move transversely in relation to the frame plane defined by the support element and the torsion bar, towards a pivoted release position when the fixing clip (10) is inserted through the mounting hole (11), but to be returned elastically by the torsion bar effect (20) towards a rest position corresponding to the locking position.

2. An integrated clip according to the previous claim **characterized in that** the base part (13) connecting it to the linear element (2) forms part of a longitudinal rib (12) extending on the inner face (4) of the linear element (2).

3. An integrated clip according to any of the previous claims **characterized in that** the support element (19) is a common reversed U-shaped torsion portal (21), which includes two verticals (22) connected at the upper part by the torsion bar (20).

4. An integrated clip according to the previous claim **characterized in that** the torsion portal (21) includes two verticals (22) lightly inclined and convergent upwards, connected at the upper part by a sensibly horizontal torsion bar (20).

5. An integrated clip according to the claim 1 or 2 **characterized in that** the support element (19) is a support rod (32) holding the torsion bar (20) at the upper part.

6. An integrated clip according to the previous claim **characterized in that** the torsion bar (20) is supported at its central zone (33) and thus projecting from both sides of the support rod (32).

7. An integrated clip according to any of the previous claims **characterized in that** it comprises a single locking bolt (23).

8. An integrated clip according to any of the claims 1 to 6 **characterized in that** it comprises two locking bolts (23).

9. An integrated clip according to any of the previous claims **characterized in that** the locking bolt (23) comprises a projecting part (27) that is largely in projection from the frame plane defined by the support element (19) and the torsion bar (20).

10. An integrated clip according to any of the previous claims **characterized in that** the locking bolt (23) is a sensibly rectangle prismatic form piece comprising a base sidewall (26) provided as a locking stop.

11. An integrated clip according to the previous claim **characterized in that** the base sidewall (26) is rounded or bevelled.

12. An integrated clip according to any of the claims 2 to 11 **characterized in that** the base part (13) is attached to the inner face (4) of the linear element (2) through a thin bottom side wall (15) being an integral part of the longitudinal rib (12) and reinforced upwards by a material overthickness (16).

13. An integrated clip according to any of the claims 2 to 12 **characterized in that** the base part (13) is displaced laterally in relation to the longitudinal rib (12).

14. An integrated clip according to any of the claims 2 to 12 **characterized in that** the base part (13) is aligned with the rest of the longitudinal rib (12) and is reinforced by at least one reinforcement transversal rib.

15. An integrated clip according to any of the previous claims **characterized in that** it further comprises a sealing plate (18).

16. A functional and/or decorative linear element (2), for example of the kind of a rod, a slat, a moulding, a bodywork belt line trim or rocker panel trim, intended to be placed against and mounted on a receiver surface (5) and more particularly on a road vehicle body (6) comprising for this on its inner face (4) fast mounting fixing means (9) designed to cooperate with series of mounting holes (11) set opposite in the receiver surface (5, 6), **characterized in that** at least one of its fixing means (9) is an integrated clip (10) according to any of the previous claims.

17. A linear element according to the previous claim **characterized in that** at least one of its fixing means (9) is an indexing clip.

18. A linear element according to claim 16 or 17 **characterized in that** it further includes a longitudinal locking means.

## Patentansprüche

1. Integrierter Clip zur Befestigung, auf einer Aufnahmeoberfläche (5), genauer gesagt auf der Karosserie (6) eines Straßenfahrzeugs, eines linearen dekorativen und/oder Funktionselements (2), zum Beispiel Stab, Band, Leiste, Zierblende für die Karosserie-Gürtellinie oder den Unterboden, wobei dieser Befestigungsclip (10) ein Basisteil (13) aufweist, das ihn mit dem linearen Element (2) verbindet, und eine Ankupplungsstruktur (14), um mit einer gegenüberliegenden Montageöffnung (11) in der Aufnahmeoberfläche (5, 6) zusammenzuwirken, **gekennzeichnet dadurch, dass** die Ankupplungsstruktur (14) mindestens ein Stützelement (19) umfasst, das als Oberteil einen Drehstab (20) trägt, an dem an seinem Oberteil mindestens ein Verriegelungsbolzen (23) aufgehängt ist, der sich unter diesem Drehstab erstreckt, um sich bewegen zu können, quer zur Ebene des Karosseriegerippes, die durch das Stützelement und den Drehstab definiert ist, in eine rotierten Freigabeposition, wenn der Befestigungsclip (10) durch die Montageöffnung (11) eingeführt wird, aber elastisch durch die Wirkung des Drehstabs (20) in eine Ruhestellung zurückgezogen zu werden, die der Verriegelungsposition entspricht.

2. Integrierter Clip nach dem vorherigen Anspruch, **gekennzeichnet dadurch, dass** das Basisteil (13), das ihn mit dem linearen Element (2) verbindet, Teil einer Längsrippe (12) ist, die sich auf der Innenseite (4) des linearen Elements (2) erstreckt.

3. Integrierter Clip nach einem beliebigen der vorherigen Ansprüche, **gekennzeichnet dadurch, dass** das Stützelement (19) ein Drehrahmen ist, (21) allgemein in der Form eines umgedrehten Us, der zwei Pfosten (22) umfasst, die als Oberteil durch den Drehstab (20) verbunden sind.

4. Integrierter Clip nach dem vorherigen Anspruch, **gekennzeichnet dadurch, dass** der Drehrahmen (21) zwei leicht geneigte Pfosten (22) umfasst, die nach oben zusammenlaufen und oben durch einen im wesentlichen waagrechten Drehstab (20) verbunden sind.

5. Integrierter Clip nach Anspruch 1 oder 2, **gekennzeichnet dadurch, dass** das Stützelement (19) ein Stützschaft (32) ist, der oben den Drehstab (20) trägt.

6. Integrierter Clip nach dem vorherigen Anspruch, **gekennzeichnet dadurch, dass** der Drehstab (20) auf Höhe seines zentralen Bereichs (33) gestützt wird und so über beide Seiten des Stützschafts (32) ragt.

7. Integrierter Clip nach einem beliebigen der vorherigen Ansprüche, **gekennzeichnet dadurch, dass** er einen einzigen Verriegelungsbolzen (23) umfasst.

8. Integrierter Clip nach einem beliebigen der Patentansprüche 1 bis 6, **gekennzeichnet dadurch, dass** er zwei Verriegelungsbolzen (23) umfasst.

9. Integrierter Clip nach einem beliebigen der vorherigen Ansprüche, **gekennzeichnet dadurch, dass** der Verriegelungsbolzen (23) ein überstehendes Teil (27) umfasst, das weit über die Ebene des Karosseriegerippes ragt, die durch das Stützelement (19) und den Drehstab (20) definiert ist.

10. Integrierter Clip nach einem beliebigen der vorherigen Ansprüche, **gekennzeichnet dadurch, dass** der Verriegelungsbolzen (23) ein Teil mit im wesentlichen prismaförmiger Rechteckform mit einer Basisflanke (26) ist, die als Verriegelungsanschlag dient.

11. Integrierter Clip nach dem vorherigen Anspruch, **gekennzeichnet dadurch, dass** die Basisflanke (26) abgerundet oder abgeschrägt ist.

12. Integrierter Clip nach einem beliebigen der Patentansprüche 2 bis 11, **gekennzeichnet dadurch, dass** das Basisteil (13) an der Innenseite (4) des linearen Elements (2) mittels einer seitlichen Bodenwand (15) von schmaler Dicke befestigt wird, einstückig mit der Längsrippe (12), un nach oben durch eine Materialüberdicke (16) verstärkt ist.

13. Integrierter Clip nach einem beliebigen der Patentansprüche 2 bis 12, **gekennzeichnet dadurch, dass** das Basisteil (13) seitlich im Verhältnis zu dem Rest der Längsrippe (12) versetzt ist.

14. Integrierter Clip nach einem beliebigen der Patentansprüche 2 bis 12, **gekennzeichnet dadurch, dass** das Basisteil (13) mit dem Rest der Längsrippe (12) ausgerichtet und durch mindestens eine Verstärkungsquerrippe verstärkt ist.

15. Integrierter Clip nach einem beliebigen der vorherigen Ansprüche, **gekennzeichnet dadurch, dass** er außerdem eine Dichtigkeitsplatine (18) umfasst.

16. Lineares dekoratives und/oder Funktionselement (2), zum Beispiel Stab, Band, Leiste, Zierblende für die Karosserie-Gürtellinie oder den Unterboden, um gegen und auf eine Aufnahmeoberfläche (5) montiert zu werden, genauer gesagt die Karosserie (6) eines Straßenfahrzeugs, mit, auf seiner Innenseite (4), Befestigungsmitteln (9) zur Schnellmontage, die mit einer Reihe von gegenüberliegenden Montageöffnungen (11) in der Aufnahmeoberfläche (5, 6) zusammenwirken, **gekennzeichnet dadurch, dass** mindestens eines der Befestigungsmittel (9) ein integrierter Clip (10) nach einem beliebigen der vorherigen Ansprüche ist.

17. Lineares Element nach dem vorherigen Anspruch, **gekennzeichnet dadurch, dass** mindestens eines der Befestigungsmittel (9) ein Kennzeichnungsclip ist.

18. Lineares Element nach Anspruch 16 oder 17, **gekennzeichnet dadurch, dass** es außerdem ein Längs-Verriegelungsmittel umfasst.
